Europäisches Patentamt

European Patent Office

Office européen des brevets

(11) Veröffentlichungsnummer: **0 108 266**
**A2**

## (12) EUROPÄISCHE PATENTANMELDUNG

(21) Anmeldenummer: 83110023.5

(22) Anmeldetag: 06.10.83

(51) Int. Cl.³: **F 24 D 19/08**
**B 01 D 19/00**

(30) Priorität: 06.10.82 DE 3237023

(43) Veröffentlichungstag der Anmeldung:
16.05.84 Patentblatt 84/20

(84) Benannte Vertragsstaaten:
AT BE CH DE FR GB IT LI LU NL SE

(71) Anmelder: Bernstein, H.F.
Madeleine-Ruoff-Strasse 24
D-8036 Herrsching(DE)

(72) Erfinder: Bernstein, H.F.
Madeleine-Ruoff-Strasse 24
D-8036 Herrsching(DE)

(74) Vertreter: Kinzebach, Werner, Dr.
Patent attorneys Reitstötter, J., Prof.Dr.Dr. Kinzebach,
W., Dr. P.O. Box 780
D-8000 München 40(DE)

(54) Entgasungsvorrichtung für Flüssigkeitsströme.

(57) Die Erfindung betrifft eine Entgasungsvorrichtung für Flüssigkeitsströme, insbesondere zum Entlüften von Wärmetausch-Kreisläufen mit einer Rohrleitung (2) zur Führung des Flüssigkeitsstromes, einem Entgasungsbehälter (1) mit Gasablaß (42), wobei der Entgasungsbehälter (1) zumindest zeitweise mit der Rohrleitung (2) in Strömungsverbindung steht und mindestens zeitweise unter einem Druck unterhalb des Druckes in der Rohrleitung (2) am Einbauort steht.

FIG.1

0108266

Die Erfindung betrifft eine Entgasungsvorrichtung für Flüssigkeitsströme, insbesondere eine Vorrichtung zum Entlüften von Wärmetausch-Kreisläufen, wie sie beispielsweise in Heizungsanlagen anzutreffen sind.

Hydraulische Systeme, insbesondere Heizungssysteme, können im allgemeinen nie derart gefüllt werden, daß keinerlei Luftblasen mehr im System übrig bleiben. Darüber hinaus tritt durch Undichtigkeiten und durch Diffusion (z.B. bei Bodenheizung in Kunststoffrohren) Gas, insbesondere Sauerstoff in die Leitung ein und verursacht Geräusche, Korrosion der Anlagenteile und eine Absenkung des Wirkungsgrades der Anlage. Man begegnet diesen Schwierigkeiten im allgemeinen dadurch, daß man das Heizungssystem über entsprechend angebrachte Entlüftungsventile immer wieder entlüftet, was jedoch äußerst zeitraubend, lästig und ungenügend ist.

Es sind auch "automatische" Entlüftungsventile gebräuchlich, die mit den Leitungen in Verbindung stehen und so in sie eindringende Luft über ein Schwimmerventil ablassen sollen. Es zeigte sich jedoch, daß diese Vorrichtungen annähernd völlig untauglich sind, da die im Kreislauf-Wasser mitgeführte Luft gar nicht durch die eine vorgesehene Leitung in die Abscheidebehälter eindringt und somit auch nicht entweichen kann.

Um diesem Problem abzuhelfen, wurde die unter der Handelsbezeichnung SPIROVENT vertriebene "Absorptions-Entgasung" vorgeschlagen. Bei diesem Gerät läuft der gesamte Flüssigkeitsstrom über einen Entgasungsbehälter. Im Entgasungsbehälter sind Mittel vorgesehen, um eine laminare Strömung zu schaffen, in der Gasblasen leicht aufsteigen können. Da die Vorrichtung nach dem Kessel, also am Punkt der höchsten Wassertemperatur angebracht wird, besitzt das durchströmende Wasser eine nur geringe Aufnahmebereitschaft für darin gelöste Gase. Die nach oben aufsteigenden Gasperlen sammeln sich in einem Raum, der durch ein Schwimmerventil bei absinkendem Flüssigkeitsspiegel mit der Umgebung in Verbindung gebracht werden kann, so daß bei genügender Gasansammlung das Gas entweichen kann. Eine derartige Anlage soll die im Kreislauf eingeschlossenen Luftblasen dadurch entfernen, daß dem Kreislauf mit Gas ungesättigtes Medium zugeführt wird, so daß die eingeschlossene Luft vom Medium bis zur Sättigung absorbiert werden kann. Bei dem bekannten Gerät wird davon ausgegangen, daß bei der Vorlauftemperatur im Kreislaufmedium weniger Gas gelöst werden kann, als bei der Rücklauftemperatur. Zum einen befinden sich jedoch oft größere Luftmengen gerade in den Anlagenteilen, welche die Vorlauftemperatur aufweisen (z.B. in der Umwälzpumpe), zum anderen ist die Löslichkeitsdifferenz entsprechend der niedrigen Temperaturdifferenz zwischen Vorlauf und Rücklauf nur äußerst gering, so daß eine wirksame Absorption nicht erwartet werden kann.

Ausgehend von diesem Stand der Technik ist es Aufgabe der vorliegenden Erfindung, eine Vorrichtung zum Entgasen von Flüssigkeitsströmen zu schaffen, die unabhängig von der Flüssigkeitstemperatur bzw.-Temperaturdifferenz die Flüssigkeit stark entgasen und somit sehr absorptionsfähig machen kann.

Diese Aufgabe wird bei einer Entgasungsvorrichtung für Flüssigkeitsströme, insbesondere zum Entlüften von Wärmetausch-Kreisläufen mit einer Rohrleitung zur Führung des Flüssigkeitsstromes und einem Entgasungsbehälter mit Gasablaß,

dadurch gelöst, daß der Entgasungsbehälter zumindest zeitweise mit der Rohrleitung in Strömungsverbindung ist und mindestens zeitweise unter einem Druck unterhalb des Druckes in der Rohrleitung am Einbauort steht.

Im folgenden werden einige bevorzugte Ausführungsformen der erfindungsgemäßen Vorrichtung anhand von Ausführungsbeispielen beschrieben, zum besseren Verständnis sollen zum Teil schematisierte Abbildungen dienen. Hierbei zeigt

Figur 1    einen Heizungskreislauf,

Figur 2    eine an den Kreislauf angeschlossene Entgasungsvorrichtung,

Figur 3    eine weitere bevorzugte Ausführungsform einer Entgasungsvorrichtung mit hydraulischem Antrieb,

Figur 4    eine bevorzugte Ausführungsform der Entgasungsvorrichtung nach Figur 3,

Figur 5    eine Entgasungsvorrichtung zum kontinuierlichen Betrieb, die sich für den mobilen Einsatz eignet,

Figur 6    eine bevorzugte Ausführungsform einer elektrisch
           betriebenen Entgasungsvorrichtung für den
           stationären Einsatz,

Figur 7    die Luftauslaßvorrichtung der Entgasungsvorrichtung nach Figur 6,

Figur 8    eine kontinuierlich betriebene Entgasungsvorrichtung für den stationären, wie auch den
           mobilen Einsatz, und

Figur 9    ein Labyrinth zur Verwendung in den vorstehend
           aufgeführten Entgasungsvorrichtungen.

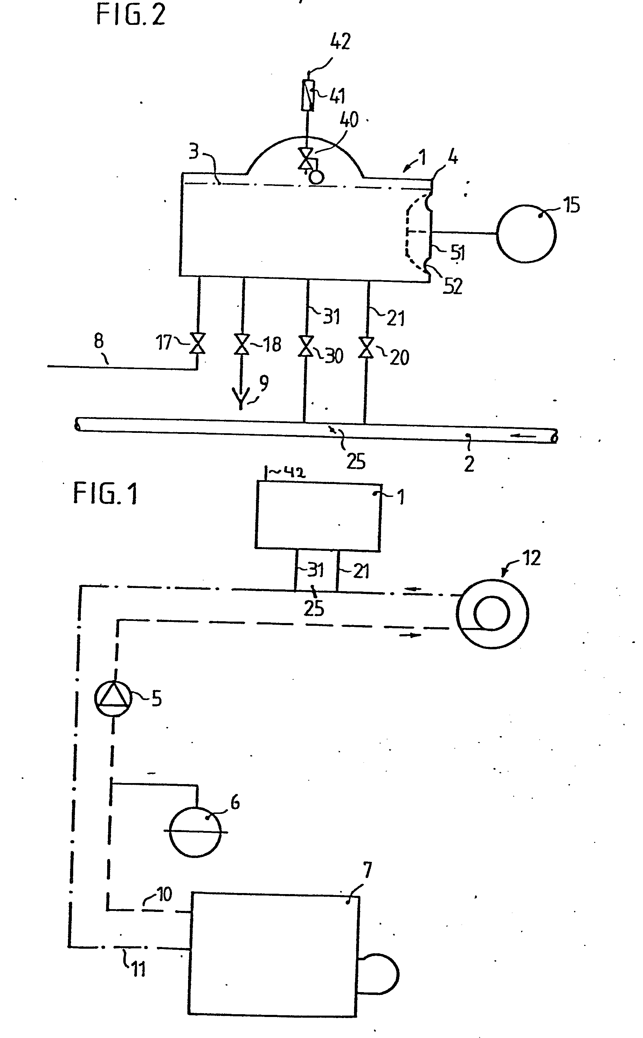

Das Heizungssystem nach Figur 1 weist einen Heizkessel 7
mit Brenner auf, aus dem das erwärmte Wasser im Vorlauf
10 von einer Umwälzpumpe 5 in das Wärmenutzungssystem 12
gefördert wird. Aus dem Wärmenutzungssystem 12 fließt
das Wasser im Rücklauf 11 in den Heizkessel zurück. Am
Vorlauf 10 ist das übliche Druckausdehnungsgefäß 6 angeschlossen. In den Kreislauf ist der Entgasungsbehälter 1
so eingeschaltet, daß zumindest ein Teil des Mediums über
die Einlaufleitung 21 in den Entgasungsbehälter 1 einströmt und über die Ablaufleitung 31 aus dem Behälter
wieder herausströmt. Der Entgasungsbehälter 1 kann, da
er weitgehend temperaturunabhängig arbeitet, im wesentlichen an jeder Stelle des Systems angebracht sein.

In Figur 2 wird eine bevorzugte Ausführungsform des
Entgasungsbehälters 1 näher dargestellt. Der Entgasungsbehälter 1 weist ein Gehäuse 4 auf, das über die Einlaufleitung 21 mit einem Einlaufventil 20 mit der
Kreislaufleitung 2, sowie der Ablaufleitung 31 mit
Ablaufventil 30 mit der Kreislaufleitung 2 verbunden ist.

Zwischen den Anschlußstellen der Ein- bzw. Ablaufleitung
ist in der Kreislaufleitung 2 eine Drossel 25 vorgesehen,
so daß zumindest ein Teilstrom des Mediums in den Entgasungsbehälter 1 geführt wird. Weiterhin weist der
Entgasungsbehälter 1 eine Befüllungszufuhr 8 mit Befüllungsventil 17, sowie einen Ablauf 9 mit Ablaufventil
18 zum Befüllen bzw. Entleeren der Anlage auf. Die Wand
4 des Entgasungsbehälters 1 weist mindestens an einer
Stelle einen Entgasungskolben 51 auf, der zur Behälterwand 4 über eine elastische Abdichtmembran 52 abgedichtet ist. Der Entgasungskolben 51 steht mit Antriebsmitteln 15 so in Verbindung, daß er in den Behälter herein (gestrichelte Linie in Figur 2) bzw. aus ihm herausgezogen werden kann. Durch diese Kolbenbewegung wird
eine Vergrößerung bzw.Verringerung des Behältervolumens
bewirkt. An seiner Oberseite weist der Entgasungsbehälter
1 ein Gasablaßventil 40, das durch einen Schwimmer bei
hohem Flüssigkeitsstand geschlossen wird, und ein zu
diesem Ventil in Reihe geschaltetes Gasrückschlagventil
41 auf, das die Luft aus dem Gasablaß 52 ausströmen, jedoch keine Luft in den Entgasungsbehälter 1 einströmen
läßt.

Im folgenden wird der Betrieb der Vorrichtung beschrieben. Zum Füllen der Anlage wird das Befüllungsventil 17
geöffnet, das Ablaufventil 18 geschlossen, Einlauf- und
Ablaufventil 21 und 31 geöffnet und die Drossel 25 geschlossen. Dadurch, daß das Frischwasser in den Innenraum des Entgasungsbehälters 1 strömt und dort eine
sehr niedrige Strömungsgeschwindigkeit aufweist, können
Gasblasen im Frischwasser zur Oberfläche steigen. Wenn
der Wasserspiegel 3 im Entgasungsbehälter 1 niedrig ist,
öffnet das Gasablaßventil 40, das durch einen Schwimmer
entsprechend dem Flüssigkeitsspiegel 3 gesteuert wird

0108266

und die Luft entweicht aus dem Gasablaß 42 über das Gasrückschlagventil 41. Steigt der Flüssigkeitsspiegel 3 durch die Frischwasserzufuhr wieder an, so schließt das Gasablaßventil 40 so lange, bis sich wieder genügend Gas im Entgasungsbehälter 1 angesammelt hat. Auf diese Weise wird ohne den Betrieb der Entgasung durch Druckverminderung bereits ein Großteil der im Flüssigkeitsstrom mitgeführten Gasblasen abgeschieden.

Vorteilhafterweise kann man bereits während des Befüllens der Anlage mit Frischwasser den Entgasungsbehälter 1 zeitweise unter Unterdruck setzen, so daß zum einen die mitgeführten Gasbläschen durch Expansion und Vergrößerung ihres Durchmessers schneller aufsteigen, zum anderen im Wasser gelöste Gase entweichen. Dieser Vorgang wird weiter unten genauer dargestellt.

Während des Befüllens der Anlage kann man den Innenraum des Entgasungsbehälters 1 auch über das Ablaufventil 18 zeitweise unter Normaldruck setzen, so daß die entsprechend dem Leitungsdruck in der Frischwasserleitung im Frischwasser gelöste Gasmenge auf die im Wasser lösbare Gasmenge beim Normaldruck reduziert wird. Hierzu schließt man nach Befüllen des Entgasungsbehälters 1 die Ventile 17, 20 und 30 und öffnet das Ablaufventil 18 und zwar bei herausgezogenem Kolben 51. Sobald der Behälter 1 unter Normaldruck steht, schließt man das Ventil 18 wieder, und läßt den Gasblasen Zeit zum Aufsteigen. Danach öffnet man das Ablaufventil 30 und betätigt die Antriebsmittel 15 derart, daß der Kolben 51 in den Behälter 1 hineingeschoben wird. Dadurch entweicht zum einen das abgeschiedene Gas durch den Gasablaß 42, zum anderen drückt man einen Teil des Behälterinhaltes durch das Ablaufventil 30 in die Rohrleitung 2. Dieser Vorgang wird so lange wieder-

0108266

holt, bis das Netz gefüllt ist.

Während der Inbetriebnahme der Anlage kann der Gasabscheidungsvorgang auch folgendermaßen ablaufen:
Man schließt (ggf. teilweise) die Drosselklappe 25,
öffnet die Ventile 20,30 und läßt das Medium durch den
Behälter 1 strömen (bei eingeschalteter Umwälzpumpe 5).
Während dieses Durchströmens öffnet man das Ventil 18,
so daß der Druck im Behälter abfällt. Durch den
Druckabfall ergibt sich die oben beschriebene Entgasung. Selbstverständlich muß anschließend die über
das Ventil 18 verworfene Menge an Medium über den
Zulauf 8 ersetzt werden.

0168266

Sobald die Anlage ganz befüllt ist, werden nur noch die Ventile 20 und 30 betätigt, die Ventile 17 und 18 bleiben geschlossen. Zum ständigen Entgasen des Mediums verfährt man folgendermaßen:

Bei hineingeschobenen Kolben 51 öffnet man das Einlaufventil 20, so daß Flüssigkeit in den Entgasungsbehälter 1 einströmt und im Entgasungsbehälter 1 vorhandene Luft durch den Gasablaß 42 entweicht, bis das Schwimmerventil 40 schließt. Darauf schließt man das Einlaufventil 20 wieder und tätigt die Antriebsmittel 15 derart, daß der Kolben 51 aus dem Entgasungsbehälter 1 herausgefahren wird. Dadurch entsteht im Entgasungsbehälter 1 ein Unterdruck, so daß entsprechend diesem Unterdruck die im Medium gelösten Gase entweichen, und die im Medium mitgeführten Gasblasen durch Expansion schnell aufsteigen. Nach einer genügenden Zeitdauer öffnet man das Befüllungsventil 20 wieder und läßt im Kreislauf enthaltenes Medium in den Behälter 1 einströmen, so daß die abgeschiedenen Gase durch den Gasablaß 42 entweichen, bis der Schwimmer das Gasablaßventil 40 wieder schließt. Daraufhin schließt man das Einlaufventil 20, öffnet das Ablaufventil 30 und betätigt die Antriebsmittel 15 derart, daß der Kolben 51 in den Entgasungsbehälter 1 hineingedrückt wird, wodurch ein Teil des im Behälter 1 enthaltenen Mediums durch das Ablaufventil 30 in den Kreislauf zurückgedrückt wird. Man kann diesen Vorgang auch mit drei Stellungen des Kolbens 51 ausführen:

Man befüllt (Ventil 20 offen) den Behälter 1 in der mittleren Kolbenstellung, schließt das Ventil 20, setzt den Behälter 1 unter Unterdruck, indem man den Kolben 51 aus dem Behälter herauszieht, drückt die entwichenen Gase durch Reinfahren des Kolbens bis zur mittleren Stellung aus dem Behälter 1 über den Gasablaß 42 heraus, öffnet das Ablaufventil 30 und fährt den Kolben 51 ganz in den Behälter 1, so daß ein Teil des im Behälter 1 enthaltenen Mediums in den Kreislauf gedrückt wird.

Die Steuerung der Ventile 20 und 30 und der Antriebsmittel 15 geschieht vorteilhafterweise über eine zeitgesteuerte Ablaufsteuerung, die hier nicht näher beschrieben wird. Es ist jedoch auch möglich, die Steuerung abhängig vom Druck (mit Einfluß der Temperatur des Mediums) selbsttätig vorzunehmen, wie dies bei einer weiteren Ausführungsform der erfindungsgemäßen Vorrichtung weiter unten beschrieben wird. Die hier in Figur 2 gezeigte Vorrichtung eignet sich sowohl für den festen Einbau in einen Kreislauf, als auch zur Herstellung einer mobilen Anlagen, die nur zeitweise (zum Befüllen und zum Entlüften) an eine bestehende Anlage angeschlossen wird.

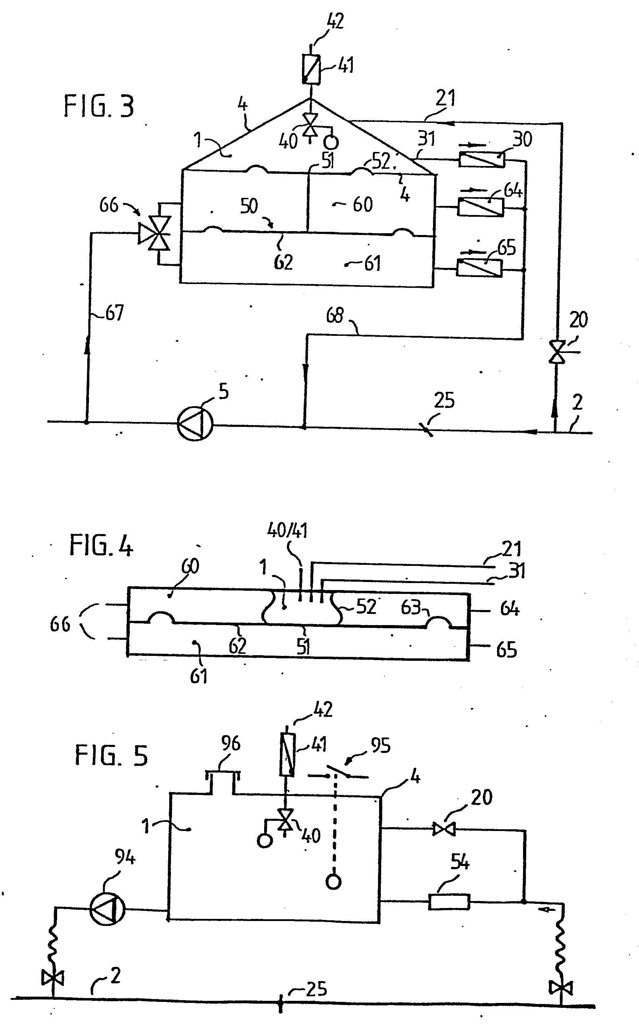

Die Anlage nach Figur 3 unterscheidet sich von der nach Figur 2 durch die Ausführung der Antriebsmittel, der Verfahrensablauf ist im wesentlichen der gleiche wie oben geschildert; zur Vereinfachung sind die Frischwasserzufuhr 8 und der Ablauf 9 nicht eingezeichnet.

Bei der Anlage nach Figur 3 werden die Antriebsmittel durch zwei Kammern 60/61 gebildet, die durch einen Kolben 62 voneinander getrennt sind, der über eine Membran abgedichtet ist. Der Kolben 62 ist fest mit dem Kolben 51 des Entgasungsbehälters 1 verbunden. Die Kammern 60 und 61 stehen über Rückschlagventile 64 und 65 mit einer Antriebsableitung 68 so in Verbindung, daß Medium aus den Kammern 60/61 in die Kreislaufleitung 2 zurückströmen kann. Weiterhin sind die Kammern 60/61 mit einem Dreiweg -Steuerventil 66 verbunden, das die Rohrleitung 2 über die Antriebszuleitung entweder mit der Kammer 60 oder mit der Kammer 61 verbindet. Zwischen der Antriebszuleitung 67 und der Antriebsableitung 68 ist eine Pumpe 5 vorgesehen, wobei die Pumpe 5 gegebenenfalls auch mit der Umwälzpumpe identisch sein kann. Um ein größeres Druckgefälle zwischen der Antriebsableitung 68 und der Antriebszuleitung 67 zu erzeugen, wird das Drosselventil 25 in der Kreislaufleitung 2 relativ weit geschlossen.

Betätigt man das Steuerventil 66 derart, daß die Kammer 60 mit der Antriebszuleitung 67 in Verbindung steht, so ergibt sich eine Druckerhöhung in der Kammer 60 gegenüber der Kammer 61, so daß der Kolben 51 aus dem Entgasungsbehälter 1 herausgezogen wird, ein Teil des in der Kammer 61 enthaltenen Flüssigkeitsvolumens strömt durch das Rückschlagventil 65 in die Ablaufleitung 68, bzw. wird sogar aus der Kammer 61 unter weiterer Krafterzeugung herausgesaugt. Schaltet man das Ventil 66 um und verbindet die Kammer 61 mit der Antriebszuleitung 67, so wird der Kolben 51 in den Entgasungsbehälter 1 hineingedrückt, das überschüssige Volumen in der Kammer 60 entweicht über das Rückschlagventil 64 in die Antriebsableitung 68 bzw. wird aus der Kammer 60 herausgesaugt. Die Steuerung des Ventils 20 und der eigentliche Entgasungsvorgang verlaufen in einer der oben beschrieben Arten. Durch die hier dargestellten Antriebsmittel ist es möglich, ein System, das normalerweise eine Pumpe mit geringerer Leistung (geringem Druck bei geforderter Fördermenge) benötigt, lediglich mit einer entsprechend leistungsstärkeren Umwälzpumpe auszurüsten, ohne weitere, zum Beispiel motorische, Antriebsmittel anbringen zu müssen. Die Steuerung der Ventile 20 und 66 kann wieder wie oben beschrieben über eine Ablaufsteuerung oder druck-temperaturgesteuert, wie unten
beschrieben, erfolgen.

In Figur 4 wird eine Anlage wie in Figur 3 beschrieben, jedoch weist diese Vorrichtung lediglich eine
Kolbenplatte auf, die in ihrer mittleren Zone als
Kolben 51 und in ihrer ringförmigen Randzone als Antriebsmittel 62 wirkt. Hierbei ist in einem Gehäuse
eine einzige Kolbenplatte über eine Abdichtmembran 63
unter Bildung der zwei Kammern 60/61 eingespannt, die
den Kolben 51 bildende mittlere Zone ist über eine
ringförmige Membran 52 zum Deckel des Gehäuses abgedichtet und umschließt so den Entgasungsbehälter 1.
Die Zu- und Ableitungen sind wie oben beschrieben,
angeschlossen. Selbstverständlich kann die in Figur 4
nur schematisch gezeigte Vorrichtung auch zum Beispiel
in Form von Kugelschalen aufgebaut sein, wodurch sich
eine Versteifung der Kolbenplatten 62 und 51 ergibt.

Bei der bevorzugten Ausführungsform der erfindungsgemäßen
Vorrichtung nach Figur 5 handelt es sich um eine vorzugsweise mobil betriebene Anlage, die einen Entgasungsbehälter 1 aufweist, der über eine leistungsstarke Pumpe
94 mit der Rohrleitung 2 verbunden ist. Der Entgasungsbehälter 1 weist hierbei einen dicht verschließbaren
Sole-Einfüllstutzen 96, die oben beschriebenen Gasablaßmittel 40,41, 42 und einen füllstandsgesteuerten
Schalter 95 (Schwimmerschalter) auf. Der Entgasungsbehälter 1 ist hierbei vorzugsweise vollständig in
den Kreislauf einbezogen, wobei der rücklaufende Teil
der Kreislaufleitung 2 über ein Reduzierventil 54 und
parallel dazu über ein steuerbares Ventil 20 mit
dem Behälter 1 in Verbindung steht. Im folgenden wird der Betrieb dieser bevorzugten Ausführungsform der erfindungsgemäßen Vorrichtung näher erläutert:

Wenn der Entgasungsbehälter 1 in die bereits befüllte Anlage eingeschaltet, aber noch leer ist, so ist der Füllstandsschalter 95 geschlossen. Das Ventil 20 und die Pumpe 94 sind derart mit dem Schalter 95 verbunden, daß bei niedrigem Flüssigkeitsspiegel im Behälter 1 das Ventil 20 geöffnet ist und die Pumpe still steht. Das Medium strömt also, so lange der Behälter noch leer ist, durch das Ventil 20 in den Behälter 1, bis der Schalter 95 entsprechend dem hohen Wasserstand schließt. Durch das Schließen des Schalters 95 wird das Ventil 20 geschlossen und die Pumpe 94 in Betrieb gesetzt. Durch die Pumpleistung entsteht im Behälter 1 ein Unterdruck, so daß durch das Reduzierventil 54 Wasser angesaugt werden kann. Das Druckreduzierventil 54 ist hierbei so eingestellt, daß es nur dann öffnet, wenn im Behälter 1 ein Unterdruck (relativ zum normalen Atmosphärendruck) herrscht. Während also die Pumpe 94 arbeitet, wird das durch das Reduzierventil 54 einströmende Medium fortwährend entgast und der Flüssigkeitsspiegel sinkt (bei konstantem Unterdruck im Behälter 1) langsam ab. Sobald der Flüssigkeitsspiegel so weit abgesunken ist, daß der Schalter 95 wieder schließt, wird die Pumpe 94 abgestellt, das Ventil 20 geöffnet und das zu entgasende Medium strömt in den Behälter 1 hinein und verdrängt hierbei die abgeschiedenen Gase über das Schwimmerventil 40 und das Rückschlagventil 41. Sobald der Schalter 95 wieder öffnet, wiederholt sich der Vorgang von neuem. Es versteht sich hierbei von selbst, daß man den Schalter 95 mit einer großen Hysteriese ausstattet, damit der Entgasungsvorgang längere Zeit kontinuierlich erfolgen kann. Selbstverständlich kann man eine derartige Anlage auch stationär in ein System einbauen, wobei dann nur ein Teilstrom über die Anlage geführt wird.

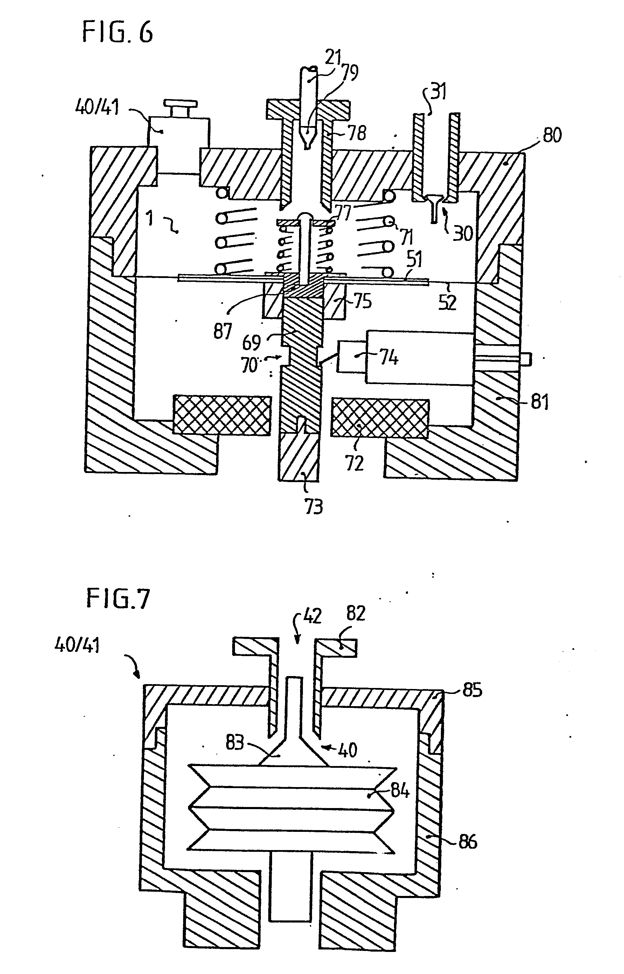

Bei der in den Figuren 6 und 7 gezeigten bevorzugten Ausführungsform der erfindungsgemäßen Vorrichtung ist ein zylindrischer Gehäusedeckel 80 auf einen Gehäusekörper 81 aufgeschraubt; zwischen den beiden Teilen ist eine ringförmige Abdichtmembran 52 eingespannt. Die Membran 52 ist in ihrem mittleren Teil von zwei Kolbenplatten 51 eingeschlossen, wobei die Kolbenplatten 51 und die Membran 52 eine mittige Bohrung aufweisen, durch die der Gewindezapfen einer Kolbenspannvorrichtung 87 ragt, die in eine Kolbenhalterung 75 eingeschraubt ist. Durch die Verschraubung sind die Kolbenplatten 51 und die Membran 52 fest und dicht verspannt. In das Innengewinde der Kolbenhalterung 75 ist auf der der Kolbenspannvorrichtung 87 gegenüberliegenden Seite ein nicht magnetisierbares Zwischenstück 69 mit einer Nut 70 eingeschraubt, die an ihrem anderen Ende einen Magnetkern 73 trägt. Auf der dem Magnetkern 73 gegenüberliegenden Seite weist die Kolbenspannvorrichtung 87 eine koaxiale Gewindebohrung auf, in die ein Bolzen eingeschraubt ist, auf dem eine Einlaßventildichtung 77 verschiebbar befestigt ist. Der Bolzen weist an seinem oberen Ende eine Verdickung auf, so daß die Scheibe 77 nicht über ihn hinaus gleiten kann. Die Scheibe 77 ist über Federmittel gegen die Kolbenspannvorrichtung 87 so verspannt, daß sie am oberen Ende des Bolzens, also den Kolbenplatten 51 gegenüberliegend sitzt. Zwischen der oberen Kolbenplatte 51 und dem Deckel 80 ist eine kräftige Feder 71 eingespannt, so daß der Kolben 51 im Normalzustand unter Vergrößerung des Volumens des Entgasungsbehälters 1 nach unten gedrückt wird. Gegenüber der Einlaßventildichtung 77 ist im Gehäusedeckel 80 ein Ventilsitz 78 angebracht, in den die Einlaufleitung 21 mündet, auf deren Ende ein Einlaßrückschlagventil 79 (z. B. ein formgepreßter Schlauch) sitzt. Der Gehäusedeckel 80 weist weiterhin eine Ablaufleitung 31 auf, die über ein Ablaufventil 30 verschlossen ist. Weiterhin ist der Deckel 80 von der Gasablaßvorrichtung 40/41 durchbrochen, die weiter unten näher beschrieben wird.

Unterhalb der Kolbenplatten 71 ist etwa in Höhe der Nut 70 ein Kippschalter 74 angeordnet, der mit seinem Knebel in die Nut 70 eingreift. Der Schalter 74 ist über eine Schraube in einem Langloch mit dem Körper 81 verbunden. Am unteren Ende des Körpers 81 ist die Wicklung 72 eines mit dem Magnetkern 73 zusammenwirkenden Hubmagneten fixiert.

Die Gasablaßvorrichtung 40/41 nach Figur 7 weist einen Deckel 85 und einen Boden 86 auf, die miteinander verschraubt sind. In den zylindrischen Deckel 85 ist mittig ein Ventilsitz 82 am oberen Ende eingeschraubt, wobei der Ventilsitz 82 mit seinem oberen Ende den Gasablaß 42 bildet. Im Inneren des aus Deckel 85 und Boden 86 bestehenden Gehäuses befindet sich ein gasdichter, elastischer Auftriebskörper 84, der hier als Faltenbalg ausgeführt ist. Der Auftriebskörper 84 trägt mittig auf seinem oberen Ende eine Luftauslaßventildichtung 83, die sich über einen Zapfen bis in den Ventilsitz 82 hinein erstreckt. An seinem unteren Ende weist der Auftriebskörper 84 einen Zapfen auf, der in eine mittige Bohrung des Bodens 86 unter Spiel eingelassen ist. Die Gasablaßvorrichtung funktioniert derart, daß bei hohem Flüssigkeitsstand der Schwimmer 84 nach oben gehoben wird, so daß das Ventil 40, bestehend aus Dichtung 83

0108266

und Sitz 82 verschlossen ist. Bei niedrigem Flüssigkeitsstand und einem Umgebungsdruck, der gleich dem Innendruck im Auftriebskörper 84 ist, ist das Ventil 40 geöffnet, bei einem Umgebungsdruck, der wesentlich unter
dem Innendruck im Auftriebskörper 84 ist, spannt sich
das untere Ende des Auftriebskörpers 84 gegen den Boden
86 und preßt so Ventildichtung 83 gegen den Ventilsitz
82 und verschließt den Gasablaß 42.

Die Vorrichtung nach Figur 6/7 funktioniert folgendermaßen:
Wenn der Schalter 74 eingeschaltet ist, so fließt
Strom durch die Spule 72, die dann den Kern 73 anzieht
und den Kolben 51 gegen die Kraft der Feder 71 nach
oben drückt. Durch diese Kraft wird ein Oberdruck in
der Kammer 1 erzeugt, der einen Teil des Kammervolumens
durch das Rückschlagventil 30 in die Ablaufleitung 31
strömen läßt. Wenn der Kolben 51 bzw. der Magnetkern 73
entsprechend der Leistung der Spule 72 ganz nach oben
gezogen ist, wird der Schalter 74 mit seinem Knebel,
der sich in der Nut 70 befindet, umgeschaltet und die
Spule 72 abgeschaltet. Durch die Kraft der Feder 71
wird der Kolben 51 nach unten gedrückt, der Gasablaß 42
ist geschlossen, da der Flüssigkeitsstand hoch ist, die
Einlaßventildichtung 77 sitzt, von der Anpreßfeder angedrückt, auf dem Ventilsitz 78. Da die Kammer 1 unter
Unterdruck steht, werden die im Medium gelösten Gase
abgeschieden. Durch die Entgasung des Mediums nähert
sich der Unterdruck in der Kammer 1 dem Normaldruck
(Atmosphärendruck), der Kolben 51 kann durch die Feder 71
weiter nach unten gedrückt werden, so daß der Flüssigkeitsstand sinkt. Sobald zum einen der Flüssigkeitsstand den Auftriebskörper 84 mit der Dichtung 83 nicht mehr gegen
den Ventilsitz 82 preßt und auch der Unterdruck in der
Kammer 1 nicht mehr ausreicht, um den Auftriebskörper 84 so weit auszudehnen, daß das Ventil 40 ganz geschlossen ist, strömt durch den Gasablaß 42 Luft ins Innere der Kammer 1, so daß diese unter Normaldruck steht. Durch diesen Druckausgleich kann die Feder 71 den Kolben 51 noch weiter nach unten drücken, so daß die Dichtung 77 vom Ventilsitz 78 abhebt und die Einlaßleitung 21 mit dem Innenraum des Behälters verbindet. Durch das einströmende Medium werden die abgeschiedenen Gase verdrängt und strömen durch den Gasablaß 42 so lange nach außen, bis der Schwimmer 84 das Ventil 40 schließt. Bei geschlossenem Ventil 40 steigt der Druck im Behälter 1 an und schiebt den Kolben 51 zusammen mit der Feder 71 weiter nach unten, bis der Schalter 74 über seinen Knebel, der in die Nut 70 eingreift, wieder umgeschaltet wird, so daß die Spule 72 wieder aktiv ist. Die Kraft der Spule 72 auf den Kern 73 schiebt den Kolben 51 wieder nach oben, wobei die Einlaßleitung 21 über das Rückschlagventil 79 verschlossen wird und ein Teil des im Behälter 1 enthaltenen Mediums über das Rückschlagventil 30 in die Auslaßleitung 31 einströmt. Sobald der Kolben 51 wieder seinen oberen Totpunkt erreicht hat und die Ventilplatte 77 auf dem Ventilsitz 78 fest anliegt, beginnt der beschriebene Vorgang von neuem.

Die hier aufgezeigte Vorrichtung ist also selbsttätig und benötigt keine zusätzliche Steuerung. Hierbei ist jedoch darauf zu achten, daß der Sitz der Dichtung 77 auf dem Ventilsitz 78 nicht absolut dicht ist (gegebenenfalls kann dies durch einen Bypass gesichert werden), da sonst ein stabiler Zustand erreicht werden kann und der Vorgang nicht mehr automatisch anläuft.

Die hier gezeigte selbsttätige Steuerung kann, in entsprechend modifizierter Art, selbstverständlich auch für die Vorrichtungen nach den Figuren 2 bis 4 verwendet werden.

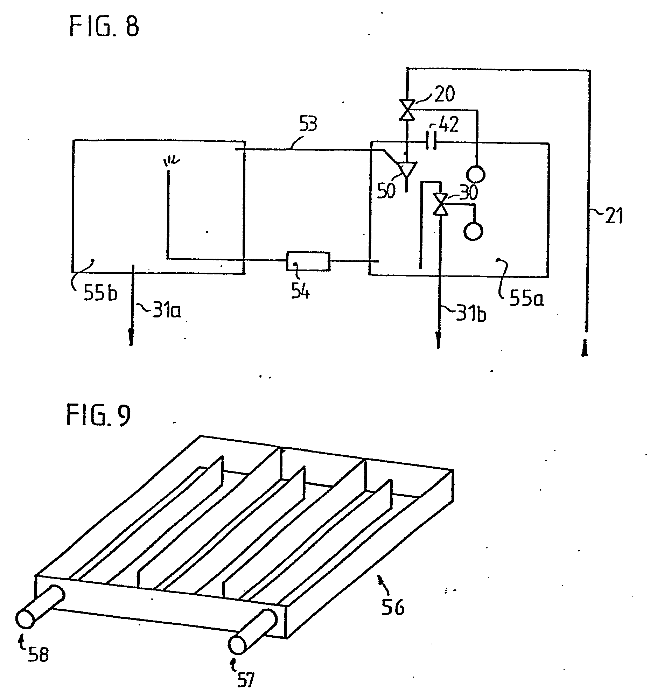

In Figur 8 ist eine weitere bevorzugte Ausführungsform der erfindungsgemäßen Vorrichtung gezeigt, die kontinuierlich betrieben werden kann. Hierbei ist die Einlaßleitung 21 mit ihrem Schwimmer-gesteuerten Absperrventil 20 mit einer Unterdruck erzeugenden Strahlpumpe 50 verbunden, wobei das durch die Leitung 21 strömende Medium den Unterdruck erzeugt und durch eine Leitung 53 aus einem Behälter 55b Luft und zu entgasendes bzw. entgastes Medium absaugt. Die Leitung 53 mündet also relativ weit oben liegend in den dichten Behälter 55b. Die Strahlpumpe 50 befindet sich in einem Behälter 55a, der über einen Gasablaß 42 (der gegebenenfalls durch ein Schwimmerventil gegen Ausströmen des flüssigen Mediums gesichert ist) mit der Atmosphäre in Verbindung steht. Am Boden des Behälters 55a mündet eine Leitung, die über ein Druckreduzierventil 54 in den Behälter 55b mündet. Ebenfalls am Boden des Behälters 55a angeordnet befindet sich eine Ablaufleitung 31b, die über ein Schwimmer-gesteuertes Ventil 30 abgesperrt werden kann. Die Funktionsweise dieser bevorzugten Ausführungsform der erfindungsgemäßen Vorrichtung ist folgendermaßen:

Bei niedrigem Flüssigkeitsstand im Behälter 55a ist das Ventil 20 geöffnet und das zu entgasende Medium 21 strömt durch die Strahlpumpe 50, so daß die Leitung 53 unter Unterdruck steht. Da der abgeschlossene Behälter 55b unter Unterdruck steht, strömt zu entgasendes Medium über das Reduzierventil 54 in den Behälter 55b. Das Reduzierventil 54 wird hierbei so eingestellt, daß im

0108266

Behälter 55b sicher Unterdruck herrscht, die Leitung 53 ist über ein Rückschlagventil (wie gewöhnlich bei Strahlpumpen vorgesehen) gegen Zurückströmen des Mediums aus dem Behälter 55a in den Behälter 55b gesichert. Da im Behälter 55b Unterdruck herrscht, werden Gasblasen vergrößert und steigen auf, im Medium gelöste Gase werden abgeschieden. Steigt der Flüssigkeitsspiegel im Behälter 55a an, so wird das Ventil 20 geschlossen und das Ventil 30 geöffnet und die im Behälter 55a enthaltene Flüssigkeit über die Leitung 31b wieder dem Kreislauf zugeführt. Die Leitung 53 saugt nicht nur die im Behälter 55b ausgeschiedenen Gase, sondern auch entgastes Medium an, das dann vermischt mit dem über die Leitung 21 hineinströmenden Medium in den Behälter 55a gelangt und so lediglich teilweise entgast dem Kreislauf wieder zugeführt wird. Die aus der Kammer 50b abgeführten Gase können durch den Gasablauf 42, der vorteilhafterweise gegen das Ausströmen flüssigen Mediums durch ein Schwimmerventil gesichert ist, entweichen. Bei dieser Betriebsweise der Vorrichtung nach Figur 8 wird das entgaste Medium, vermischt mit zu entgasendem Medium dem Behälter 55a entnommen, da dieser Behälter unter Atmosphärendruck steht und somit eine geringere Druckdifferenz zum Druck in der Kreislaufleitung 2 aufweist, als das Innere des Behälters 55b. Bei dieser Vorrichtung ist es also möglich, mit relativ leistungsschwachen Pumpen zwischen der Ablaufleitung 31b und der Kreislaufleitung 2 auszukommen. Man kann als Absaugpumpe vorteilhafterweise eine mehrstufige Strahlpumpe vorsehen, die von der im Heizungssystem vorgesehen Umwälzpumpe mit Energie versorgt wird. Die auftretenden Druckdifferenzen zwischen dem Behälter 55a und der Kreislaufleitung 2 sind so relativ leicht realisierbar, während ein Absaugen über eine Leitung 31a, die mit der Kammer 55b kommuniziert, wesentlich höhere Pumpleistungen fordert.

Wenn man jedoch direkt aus der Unterdruckkammer 55b entgastes Medium (ohne Zusatz von zu entgasendem Medium) absaugt, so sieht man vorteilhafterweise ein Schwimmerventil vor, das die Ablaufleitung 31a bei niedrigem Flüssigkeitsstand verschließt. Die hier gezeigte Vorrichtung wird vorteilhafterweise mit handelsüblichen und darum sehr betriebssicheren Pumpen betrieben, die Strahlpumpen weisen keine Verschleißerscheinungen auf, so daß eine hohe Betriebssicherheit der gesamten Anlage gewährleistet ist.

Bei allen bisher gezeigten Ausführungsformen der erfindungsgemäßen Vorrichtung wird der Innenraum des Entgasungsbehälters 1 vorteilhafterweise so ausgestaltet, daß die entstehenden, bzw. die mitgeführten Gasblasen einen möglichst kurzen Weg zur Oberfläche des flüssigen Mediums zurückzulegen haben, die Oberfläche aber möglichst groß ist. Eine Vorrichtung, die dies bewerkstelligt, ist in Figur 9 gezeigt, wobei ein Zufluß 57 mit einem Abfluß 58 über ein Labyrinth in einer flachen Wanne in Verbindung steht. Vorteilhafterweise werden mehrere derartige Labyrinthe hintereinander geschaltet bzw. übereinander angeordnet. Zur Verkürzung des Weges der Gasblasen und zur Vergrößerung der Oberfläche des zu entgasenden Mediums ist es auch vorteilhaft, die zu entgasende Flüssigkeit in den unter Unterdruck stehenden Entgasungsbehälter 1 unter Vernebelung einzusprühen oder Rieselkaskaden anzubringen. Zur Abscheidung von eventuell entstehendem Schaum eignen sich auch Drahtverhaue oder entsprechend angeordnete Lamellen und Siebe.

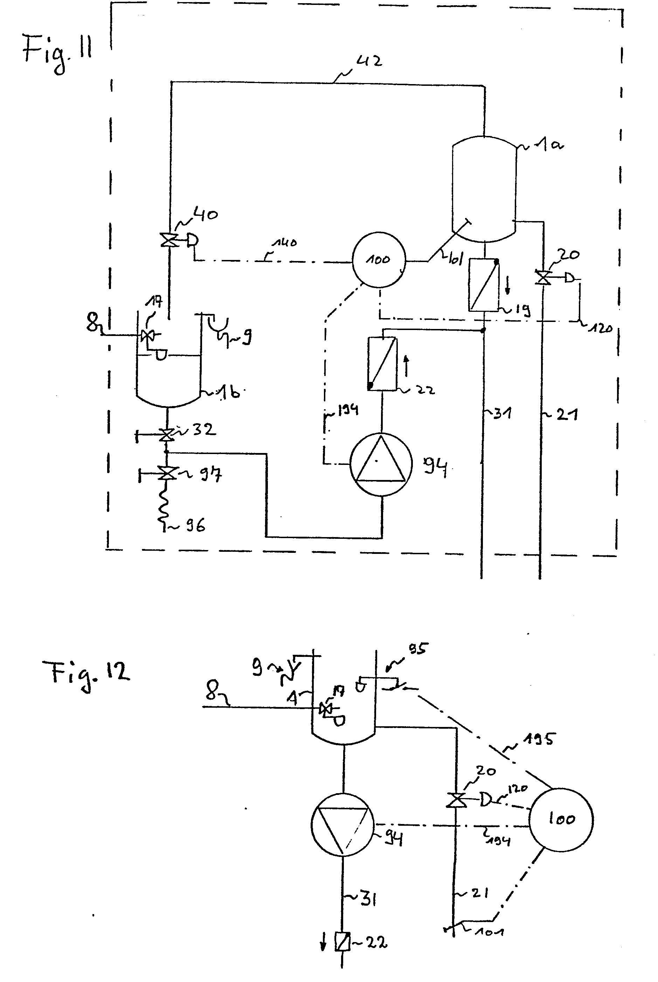

·Bei einer weiteren bevorzugten Ausführungsform der vorliegenden Erfindung, die in den Figuren 11 und 12 beschrieben ist, wird der Entgasungsbehälter 1, bzw. 1a über eine Zulaufleitung 21 an die Rohrleitung 2 angeschlossen. In der Zulaufleitung 21 ist ein ferneinstellbares Ventil 20 angebracht, das den Entgasungsbehälter 1 bzw. 1a mit der Rohrleitung 2 in Verbindung bringen oder von dieser abtrennen kann. Um den Druck im Entgasungsbehälter abzusenken, bringt man diesen zumindest zeitweise mit der Atmosphäre in Verbindung.

Im folgenden wird die in Figur 12 dargestellte bevorzugte Ausführungsform der erfindungsgemäßen Entgasungsvorrichtung, sowie ihre Funktionsweise im Detail beschrieben. Die Zulaufleitung 21, die über ein T-Stück mit der Rohrleitung 2 (nicht gezeigt) in Verbindung steht, ist über ein Ventil 20 an einen zur Atmosphäre im wesentlichen offenen Entgasungsbehälter 1 angeschlossen. Das Ventil 20 ist über eine Steuerleitung 120 mit einer Steuerung 100 verbunden, die vorzugsweise als elektronische Vorrichtung aufgebaut ist. Vorzugsweise am tiefsten Punkt des Entgasungsbehälters 1 ist eine Druckpumpe 94 saugseitig angeschlossen, an der Druckseite der Druckpumpe 94 ist die Abflußleitung 31 angeschlossen, die wieder in die Rohrleitung 2 (nicht gezeigt) über ein T-Stück mündet. Eine Frischwasserleitung 8 mündet ebenfalls in den Druckbehälter 1 und wird durch ein schwimmergesteuertes Ventil 17 dann geöffnet, wenn der Flüssigkeitspegel im Entgasungsbehälter 1 einen Mindeststand erreicht hat. Weiterhin ist im Entgasungsbehälter ein Oberlauf 9 vorgesehen, der so angeordnet und dimensioniert ist, daß selbst bei einem Klemmen des Schwimmerventiles 17 das zulaufende Frischwasser sicher abfließen kann. Ebenfalls im Entgasungsbehälter ist ein Füllstandsmelder 95 angeordnet, (hier als schwimmergesteuerter Schalter gezeichnet), der über die Steuerleitung 195 den tatsächlichen Flüssigkeitspegel im Entgasungsbehälter 1 der Steuerung 100 mitteilt. Die Druckpumpe 94 wird über die Steuerleitung 194 ebenfalls von der Steuerung 100 kontrolliert. Weiterhin ist ein Drucksensor 101 so im Rohrleitungssystem angeordnet, daß dieser Druckfühler 101 den Druck im System im wesentlichen unabhängig vom Betriebszustand des Ventiles 20 und der Pumpe mißt.

Die elektronische Steuerung 100 weist verschiedene Programmspeicher auf (z.B. PROM's oder EPROM's), sowie einen Zeitgeber.

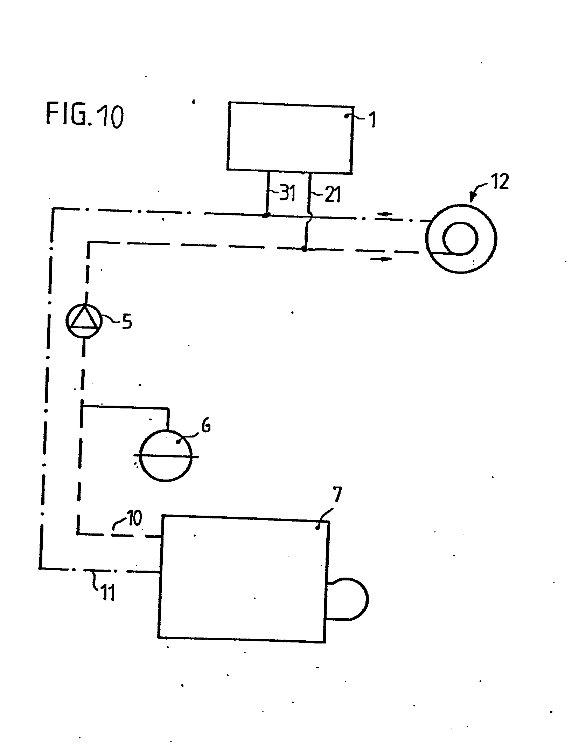

Die Rohrleitung 21 mündet, wie in Figur 10 gezeigt, vorzugsweise kurz nach dem Druckstutzen der Umwälzpumpe 5 in das Heizungssystem, die Rückflußleitung 31 mündet in den Abschnitt der Rohrleitung 2, der aus dem Wärmetauschersystem 12 kommt.

Die Funktionsweise der oben beschriebenen erfindungsgemäßen Vorrichtung ist nun folgende:

Bei der Erstbefüllung eines Heizungssystems stellt man die Steuerung 100 auf ein erstes Programm, welches das Ventil 20 zumindest solange offen hält, wie der Flüssigkeitspegel im Entgasungsbehälter 1 einen Maximalstand nicht überschreitet. Weiterhin wird die Druckpumpe 94 zumindest so lange in Betrieb gesetzt, wie der Flüssigkeitspegel im Entgasungsbehälter 1 einen Minimalstand nicht unterschreitet. Da anfänglich der Entgasungsbehälter 1 leer ist, öffnet das Schwimmerventil 17, so daß Frischwasser aus der Leitung 8 in den Entgasungsbehälter 1 strömt, worauf dieses Frischwasser über die Druck-

0108266

pumpe 94 und die Leitung 31 in das System eingespeist wird. Dieser Vorgang dauert so lange an, bis aus der Leitung 21 so viel Wasser strömt, daß die Wassermenge zusammen mit der zugeführten Frischwassermenge die von der Pumpe 94 abgesaugte Wassermenge überschreitet und somit der Wasserpegel im Entgasungsbehälter 1 steigt, bis der Schwimmerschalter 17 schließt. Da die Pumpe 94 ständig weiterläuft (ebenso natürlich die Umwälzpumpe 5), werden grobe Luftblasen aus dem Heizungssystem entfernt, so daß der Flüssigkeitsspiegel im Entgasungsbehälter 1 zumindest zeitweise wieder sinkt, das Schwimmerventil 17 öffnet und Frischwasser aus der Leitung 8 nachströmt. Wenn das Heizungssystem vollständig gefüllt ist, spielt sich der Pegel im Entgasungsbehälter 1 so ein, daß das Schwimmerventil 17 ständig geschlossen bleibt. Damit ist die Erstbefüllung des Systems abgeschlossen.

Im Dauerbetrieb wird ein anderes Programm in der Steuerung 100 verwendet. Bei diesem Programm wird das Ventil 20 geöffnet, bis ein Maximalstand im Entgasungsbehälter 1 erreicht ist. Da der Entgasungsbehälter 1 mit der Atmosphäre in Verbindung steht, das Heizungssystem jedoch unter Überdruck steht, entweicht ein Großteil der in der Flüssigkeit gelösten Gase entsprechend dem niedrigeren Druck. Nach einiger Zeit (bestimmt von dem Zeitgeber in der Steuerung 100) wird die Pumpe 94 eingeschaltet und saugt die Flüssigkeit aus dem Entgasungsbehälter 1 ab bzw. drückt die Flüssigkeit entgegen dem Systemdruck in das System zurück, und zwar so lange, bis der Druck im System, den der Druckfühler 101 mißt, dem vorgesehenen Druck entspricht. Falls also Flüssigkeit im System fehlt, wird die Pumpe 94 auch dann noch absaugen, wenn der Flüssigkeitspegel im Entgasungsbehälter 1 einen Punkt unterschritten hat, bei dem das

0108266

Schwimmerventil 17 öffnet und Frischwasser aus der Leitung 8 nachströmt. Sobald der vorgesehene Systemdruck erreicht ist, wird die Pumpe 94 abgestellt und der oben beschriebene Vorgang wiederholt sich. Selbstverständlich ist es bei entsprechender Anordnung des Druckfühlers 101 auch möglich, das Ventil 20 sehr oft auf- und zuzumachen bzw. proportional zu regeln und die Pumpe 94 fast ständig laufen zu lassen. Diese letztere Betriebsweise erfordert jedoch eine unnötig hohe Betriebsdauer der Pumpe 94. Bei der diskontinuierlichen Betriebsweise hingegen kann das Medium im Entgasungsbehälter 1 vollständig ausgasen, bevor die Pumpe 94 eingeschaltet wird.

Bei einer weiteren bevorzugten Ausführungsform der vorliegenden Erfindung, wie sie in der Figur 11 dargestellt ist, ist eine Steuerung 100, eine Pumpe 94, ein Druckfühler 101 und ferneinstellbare Ventile vorgesehen, wie dies oben bereits beschrieben wurde. Vorzugsweise wird das in Figur 11 gezeigte System ebenfalls wie in Figur 10 gezeigt, im Heizungssystem angeordnet.

Bei der Ausführungsform nach Figur 11 sind zwei Entgasungsbehälter 1a und 1b vorgesehen, wobei der erste Entgasungsbehälter 1a über das ferneinstellbare Ventil 20 und die Leitung .21 mit der Rohrleitung 2 in Verbindung steht. Weiterhin ist vorzugsweise am höchsten Punkt des Druckbehälters 1a die Abgasleitung 42 vorgesehen, die durch ein ferneinstellbares Ventil 40 verschlossen werden kann und in den zweiten, mit der Atmosphäre in ständiger Verbindung stehenden zweiten Behälter 1b mündet. Am tiefsten Punkt des ersten Entgasungsbehälters 1a ist eine Ablaufleitung mit Rückschlagventil 19 angeschlossen, die in die Ablaufleitung 31 mündet.

Die Ablaufleitung 31 mündet, wie in Figur 10 gezeigt, in das Rohrleitungssystem. Der zweite Entgasungsbehälter 1b weist ebenso wie bei der Ausführungsform nach Figur 12 einen schwimmergesteuerten Frischwasserzulauf und einen Überlauf 9 auf. Am tiefsten Punkt des zweiten Entgasungsbehälters 1b ist die Druckpumpe 94 saugseitig angeschlossen, wobei vorzugsweise zwischen Entgasungsbehälter 1b und Pumpe 94 ein Handventil 32 angebracht ist und ein zweites Handventil 97 mit Schlauchanschluß 96 ebenfalls an der Saugseite der Druckpumpe 94 hängt. Druckseitig mündet die Druckpumpe 94 über ein Rückschlagventil 22 in die Ablaufleitung 31. Im ersten Entgasungsbehälter 1a ist darüber hinaus der Druckgeber 101 angebracht. Der Druckgeber 101, die Ventile 20 und 40 und die Druckpumpe 94 werden von der Steuerung 100 über Steuerleitungen 120, 140 und 194 gesteuert. Die Steuerung ist, wie oben beschrieben, mit verschiedenen Programmspeichern ausgerüstet. Im folgenden wird die Funktionsweise der eben beschriebenen bevorzugten Ausführungsform der erfindungsgemäßen Vorrichtung näher beschrieben:

Bei der Erstbefüllung des Systems sind die Ventile 20, 40 und 32 geöffnet, die Pumpe 94 ist in Betrieb. Da der Pegelstand im zweiten Entgasungsbehälter 1b niedrig ist, ist das Schwimmerventil 17 geöffnet, Frischwasser strömt aus der Leitung 8 ein und wird von der Pumpe 94 ins System gedrückt. Durch die Einlaufleitung 21, den ersten Entgasungsbehälter 1a und den Gasablaß 42 strömt die Luft vor der nachfolgenden Flüssigkeit aus, bis das System gefüllt ist, der erste Entgasungsbehälter 1a voll ist und über die Leitung 42 überläuft und somit den zweiten Entgasungsbehälter 1b füllt, worauf das Schwimmerventil 17 schließt. In dieser Betriebsweise läßt man das System eine ganze Weile laufen, bis keine großen Luftblasen mehr entweichen. Will man (z.B. bei Solarheizungen etc.) Sole in das System einfüllen, so benützt man für die einzufüllende Sole den Schlauch 96 und schließt das Ventil 32, öffnet das Ventil 97. Auf diese Weise wird die Sole von der Druckpumpe 94 angesaugt.

Im Dauerbetrieb öffnet die Steuerung 100 bei zunächst geschlossenem Ventil 40 das Ventil 20, so daß aufgrund der von der Umwälzpumpe 5 erzeugten Druckdifferenz das Kreislaufmedium durch die Leitung 21 in den Entgasungsbehälter 1a strömt und über das Rückschlagventil 19 und die Leitung 31 in das System zurückfließt. Nach einer gewissen Zeit ist sichergestellt, daß im Entgasungsbehälter 1a im wesentlichen nur noch Medium mit relativ hohem Anteil an gelöstem Gas ist. Zu diesem Zeitpunkt schließt die Steuerung 100 das Ventil 20 und öffnet daraufhin das Ventil 40. Über die Leitung 42 steht dann der Entgasungsbehälter 1a unter Atmosphärendruck, so daß die in der Flüssigkeit gelösten Gase aus der Flüssigkeit austreten. Selbstverständlich wird hierbei ein gewisser Anteil an Flüssigkeit über die Leitung 42 in den zweiten Entgasungsbehälter 1b gelangen. Nach einer von der Steuerung 100 festgelegten Zeit wird das Ventil 40 wieder geschlossen und das Ventil 20 geöffnet, so daß der erste Entgasungsbehälter 1a wieder mit dem vollen Systemdruck beaufschlagt wird. Zu diesem Zeitpunkt mißt also der Druckfühler 101 den Systemdruck und die Steuerung 100 vergleicht aufgrund der ihr vorher einprogrammierten Werte den tatsächlichen Systemdruck mit einem Sollwert. Wenn der Systemdruck unterhalb des Sollwertes liegt, bedeutet dies, daß zuwenig Flüssigkeit im System ist, woraufhin die Steuerung 100 die Druckpumpe 94 anlaufen läßt (im Dauerbetrieb ist selbstverständlich

0108266

das Ventil 97 geschlossen, das Ventil 32 geöffnet). Wenn die Pumpe 94 anläuft, so wird die während der vorhergehenden Entgasungsvorgänge über die Leitung 42 abgelassene Flüssigkeit wieder in den Kreislauf zurückgebracht, falls Flüssigkeit im System fehlt, wird diese über das Schwimmerventil 17 und die Frischwasserzufuhr 8 ergänzt.

Bei der vorher beschriebenen Arbeitsweise der Vorrichtung nach Figur 11 ist bei 2-Punkt Verhalten der Steuerung gewährleistet, daß die Druckpumpe 94 nur dann anlaufen muß, wenn der zweite Entgasungsbehälter 1b, der als Kapazität wirkt, relativ voll ist. Die Pumpe 94 arbeitet dann so lange, bis der Systemdruck wieder voll hergestellt ist. Durch diese Arbeitsweise wird eine extrem geringe Belastung der Druckpumpe 94 gefordert, während die Entgasungswirkung dennoch optimal ist.

Selbstverständlich kann in Heizungssystemen, die selbst über Druckpumpen nach Art der Druckpumpe 94 verfügen (z.B. Heizungssyste in Hochhäusern) die Vorrichtung nach den Figuren 11 und 12 entsprechend modifiziert, also ohne Druckpumpe 94 ausgestattet werden.

Die bevorzugten Ausführungsformen der erfindungsgemäßen Vorrichtung nach den Figuren 11 und 12 ermöglichen einen vollautomatischen Betrieb einer Heizungsanlage auch dann, wenn z.B. Bodenheizungen mit den eingangs beschriebenen Schwierigkeiten verwendet werden, ohne daß eine manuelle Entlüftung oder eine Nachfüllung des Systems notwendig wären. Weiterhin ist durch diese Ausführungsformen gewährleistet, daß Heizungssysteme mit Solefüllung besonders leicht befüllt werden können und während

0108266

des kontinuierlichen Entlüftungsbetriebes keinerlei Flüssigkeit durch den Entlüftungsvorgang verloren geht.

.P.a.t.e.n.t.a.n.s.p.r.ü.c.h.e

1. Entgasungsvorrichtung für Flüssigkeitsströme, insbesondere zum Entlüften von Wärmetausch-Kreisläufen mit einer Rohrleitung/zur Führung des Flüssigkeitsstromes und einem Entgasungsbehälter/mit Gasablaß,

   d a d u r c h   g e k e n n z e i c h n e t , daß der Entgasungsbehälter (1) zumindest zeitweise mit der Rohrleitung (2) in Strömungsverbindung ist und mindestens zeitweise unter einem Druck unterhalb des Druckes in der Rohrleitung (2) am Einbauort steht.

2. Entgasungsvorrichtung nach Anspruch 1, dadurch gekennzeichnet, daß der Entgasungsbehälter (1) einen vorzugsweise über eine Membraneinspannung (52) zur Behälterwand (4) abgedichteten Kolben (51) aufweist, der über vorzugsweise elektrische oder hydraulische Antriebsmittel (15; 60, 61; 72, 73) so verschoben wird, daß das Volumen des Entgasungsbehälters (1) verändert wird.

3. Entgasungsbehälter nach einem der vorhergehenden Ansprüche, dadurch gekennzeichnet, daß der Gasablaß (42) ein in Ablaßrichtung durchströmbares Gas-Rückschlagventil (41) aufweist, zu dem ein vom Flüssigkeitsspiegel (3) im Entgasungsbehälter (1) gesteuertes Ventil (40) in Reihe geschaltet ist.

4. Entgasungsbehälter nach einem der vorhergehenden Ansprüche, dadurch gekennzeichnet, daß der Entgasungsbehälter (1) über Ventilmittel (17,18) verschließbare
Leitungen (8,9) zur Befüllung bzw. Entleerung des
Kreislaufes, sowie gegebenenfalls einen Einfüllstutzen
(96) zum Einfüllen von Sole aufweist.

5. Entgasungsbehälter nach einem der Ansprüche 2 bis 4,
dadurch gekennzeichnet, daß die Antriebsmittel aus
zwei Kammern (60,61) bestehen, zwischen denen ein abgedichteter Kolben (62) angeordnet ist, der mit dem
Kolben (51) starr verbunden ist, und daß die Kammern
(60,61) über ein steuerbares Dreiwegventil (66) mit
einer Druckleitung (67) und über Rückschlagventile (64,
65) mit einer Saugleitung (68) in Verbindung stehen,
wobei zwischen Druck- (67) und Saugleitung (68) Pumpenmittel (55) angeordnet sind.

6. Entgasungsbehälter nach Anspruch 5, dadurch gekennzeichnet, daß der Kolben (51) eine Teilfläche des
Kolbens (62) bildet.

7. Entgasungsbehälter nach einem der Ansprüche 2 oder 3,
dadurch gekennzeichnet, daß der im wesentlichen zylindrische Entgasungsbehälter (1) aus einem Deckel (81)
und einem Boden (80) besteht, zwischen denen die Abdichtungsmembran (52) eingespannt ist, deren mittlerer Teil von zwei Kolbenplatten (51) versteift wird,
die durch eine in eine Kolbenhalterung (75) eingeschraubte Kolbenspannvorrichtung (87) mit der Membran
(52) verspannt sind, wobei die Kolbenspannvorrichtung
(87) eine durch Federmittel vorgespannte Einlaßdichtung (77) aufweist, die auf einem Einlaßventilsitz (78) mit angekoppelter Einlaßleitung (21) und Rückschlagventil (79) im wesentlichen nur dann nicht abdichtend aufliegt, wenn das Behältervolumen maximal ist, wobei der Kolben(51) über eine Unterdruck erzeugende Feder (71) vorgespannt ist, zu der entgegenwirkend die aus Kern (73) und Spule (72) bestehenden Antriebsmittel angeordnet sind, die über Schaltvorrichtungen (74) gesteuert werden, wobei die Schaltvorrichtungen (74) über Verbindungsmittel (67,70) mit dem Kolben (51) so gekoppelt sind, daß die Spule (72) dann eingeschaltet wird, wenn das Volumen im Entgasungsbehälter (1) maximal ist und dann ausgeschaltet wird, wenn das Volumen des Entgasungsbehälters (1) minimal ist, wobei der Gasablaß (42) mit einem Luftauslaßventilsitz (82) in Verbindung steht, auf dem eine Luftauslaßventildichtung (83), die von einem dichten, längenveränderbaren Schwimmer (84) getragen wird, dann abdichtend aufliegt, wenn entweder der Flüssigkeitsspiegel (3) den Schwimmer (84) anhebt, oder der Schwimmer (84) sich entsprechend einem Unterdruck im Entgasungsbehälter (1) ausdehnt und gegen einen Boden (86) drückt.

8. Entgasungsvorrichtung nach Anspruch 1, dadurch gekennzeichnet, daß der Entgasungsbehälter (1) eine erste offene Kammer (55a) und zweite, abgeschlossene Kammer (55b) aufweist, die über eine Absaugleitung (53) mit einer Vakuumpumpe, vorzugsweise einer an die Einlaßleitung (21) angeschlossenen Wasserstrahlpumpe (50), und über ein Druckreduzierventil (54) so in Verbindung steht, daß in der zweiten Kammer (55b) ein Unterdruck herrscht.

9. Entgasungsvorrichtung nach Anspruch 1, dadurch gekennzeichnet, daß der Entgasungsbehälter (1) über ein zum Einlaufventil (20) parallel geschaltetes Druckreduzierventil (54) und über eine Pumpe (94) mit der Rohrleitung (2) in Verbindung steht, wobei das Einlaufventil (20) und die Pumpe (94) mit einem vom Flüssigkeitsspiegel (3) gesteuerten Schalter (95) verbunden sind.

10. Entgasungsvorrichtung nach Anspruch 1, dadurch gekennzeichnet, daß der Entgasungsbehälter (1;1a,1b) eine Zulaufleitung (21) mit ferneinstellbarem Zulaufventil (20) aufweist, und daß eine Ablaufleitung (31) mit eingeschalteter Druckpumpe (94) vorgesehen ist, welche die Flüssigkeit, die unterhalb des Druckes in der Rohrleitung (2) steht, mindestens auf den Druck in der Rohrleitung (2) bringt.

11. Entgasungsvorrichtung nach Anspruch 10, dadurch gekennzeichnet, daß der Innenraum des Entgasungsbehälters (1;1a,1b) mit der Atmosphäre mindestens zeitweise in Verbindung steht, das Zulaufventil (20) und die Druckpumpe (94) mit einer vorzugsweise elektronisch arbeitenden Steuerung (100) über Steuerleitungen (120,194) verbunden sind.

12. Entgasungsvorrichtung nach Anspruch 11, dadurch gekennzeichnet, daß der Entgasungsbehälter (1) in dauernder Verbindung mit der Atmosphäre steht, der Entgasungsbehälter (1) über ein schwimmergesteuertes Einlaßventil (17) mit einer Frischwasserleitung (8) in Verbindung steht, und ein Füllstandsmelder (95) im Entgasungsbehälter (1) angeordnet und mit der Steuerung (100) verbunden ist,
wobei die Steuerung (100) dann das Zulaufventil (20) schließt, wenn ein Maximalpegel im Entgasungsbehälter erreicht ist und die Druckpumpe (94) dann anlaufen läßt, wenn ein Minimaldruck in der Rohrleitung (2) herrscht.

13. Entgasungsvorrichtung nach Anspruch 12, dadurch gekennzeichnet, daß ein Druckfühler (101) vorgesehen ist, der mit der Steuerung (100) verbunden ist und einen Druck mißt, der zumindest zeitweise dem Druck in der Rohrleitung (2) entspricht.

14. Entgasungsvorrichtung nach Anspruch 11, dadurch gekennzeichnet, daß der Entlüftungsbehälter (1a) nur über den Gasablaß (42) mit einem ferneinstellbaren Gasablaßventil (40) zeitweise mit der Atmosphäre in Verbindung steht,
der Gasablaß (42) in einen offenen zweiten Entlüftungsbehälter (1b) mündet, der vorzugsweise über ein schwimmergesteuertes Einlaßventil (17) mit einer Frischwasserleitung (8) in Verbindung steht,
die Druckpumpe (94) mit nachgeschaltetem Rückschlagventil (22) zwischen den zweiten Entlüftungsbehälter (1b) und die Ablaufleitung (31) geschaltet ist, und der erste Entgasungsbehälter (1a) über ein Rückschlagventil (19) mit der Ablaufleitung (31) in Verbindung steht.

15. Entgasungsvorrichtung nach Anspruch 14, dadurch gekennzeichnet, daß ein Druckfühler (101) im ersten Entgasungsbehälter (1a) vorgesehen ist, der ebenso mit der Steuerung (100) verbunden ist, wie die ferneinstellbaren Ventile (20,40) und die Druckpumpe (94).

16. Entgasungsvorrichtung nach Anspruch 15, dadurch gekennzeichnet, daß die Steuerung (100) verschiedene
Steuerprogramme und Mittel zum manuellen oder automatischen Anwählen der Steuerprogramme aufweist,
wobei
bei einem ersten Programm das Einlaufventil (20) geöffnet, das Gasablaßventil (40) geschlossen ist und
die Pumpe (94) bei Erreichen eines Minimaldruckes
im Entgasungsbehälter (1) anläuft;
bei einem zweiten Programm das Gasablaßventil (40)
geöffnet, das Einlaufventil (20) geschlossen ist;
und bei einem dritten Programm, das bei der Erstbefüllung eines Systems verwendet wird, die Pumpe (94)
in Betrieb ist und die Ventile (20,40) geöffnet
sind.

17. Entgasungsvorrichtung nach einem der vorhergehenden
Ansprüche, dadurch gekennzeichnet, daß der Entgasungsbehälter (1) mit der Rohrleitung (2) über zwei Leitungen (21,31) mit Ventilen (20,30) in Verbindung
steht, wobei die Rohrleitung (2) zwischen den Anschlußstellen der Leitungen (21,31) eine Drossel
(25) aufweist.

18. Entgasungsvorrichtung nach einem der Ansprüche 1
bis 16, dadurch gekennzeichnet, daß der Entgasungsbehälter (1) mit der Rohrleitung (2) über zwei Leitungen (21,31) mit Ventilen (20,30) in Verbindung
steht, wobei die Einlaufleitung (21) zum Entgasungsbehälter (1) zwischen einer Umwälzpumpe (5) und dem
Wärmetauschersystem (12), die Ablaufleitung (31) vom Entgasungsbehälter (1) zwischen dem Wärmetauschersystem (12) und dem Heizkessel (7) in die Rohrleitung (2) münden.

19. Entgasungsvorrichtung nach einem der vorhergehenden Ansprüche, dadurch gekennzeichnet, daß der Entgasungsbehälter (1) in seinem Inneren Mittel (56) aufweist, durch die eine Vergrößerung der Oberfläche des Flüssigkeitsspiegels (3) und eine Verringerung der Höhe des Flüssigkeitsspiegels (3) bewirkt werden.

FIG.2

FIG.1

FIG. 3

FIG. 4

FIG. 5

FIG. 6

FIG.7

FIG. 8

FIG. 9

FIG.10

1

31  21

12

5

6

10

11

7

Fig. 11

Fig. 12